# DEMANDE DE BREVET EUROPEEN

(11) **EP 0 821 904 A1**
(43) Date de publication de la demande: **04.02.1998**
(21) Numéro de dépôt: 96112348.6
(22) Date de dépôt: 31.07.1996
(51) Int. Cl.: A47J 27/16

(54) **Appareil de cuisson**

(71) Demandeur: Cecile, Guito, 97410 Saint-Pierre (RE)
(72) Inventeur: Cecile, Guito, 97410 Saint-Pierre (RE)

(57) **Abrégé**

Appareil à faire des grillades en éliminant les matières grasses en surabondance dans les aliments sans les déshydrater. Le goût des produits grillés est considérablement amolioré.

L'invention concerne un dispositif convivial et fonctionnel permettant de griller des denrées alimentaires dans une atmosphère de vapeur d'eau, en évitant tous les inconvénients des pratiques traditionnelles.

Ce disposotif à caractère économique, écologique et à cuisson diététique est constitué de deux bacs à charbon latéraux (5) produisant de la chaleur, complétés par des récupérateurs de cendre et en partie centrale sont superposés un bac à eau (12), un bac à graisse (13) et des grilles amovibles (14) recevant les aliments.

Cet appareil clos et étanche, est utilisable en milieu protégé ou exposé quel que soit le temps et l'évolution de la cuison est visible en permanence.

## Description

La présente invention concerne un appareil de cuisson permettant de faire des grillades au charbon de bois sous atmosphère de vapeur d'eau, en milieu fermé. Tout en offrant un aspect plus convivial que le barbecue classique, ce fourneau possède des particularités intéressantes.

Son objectif principal est l'amélioration de la qualité du goût des aliments.
Ses caractéristiques secondaires sont les suivantes : une cuisson à valeur diététique, une grillade rapide d'où une économie de combustible; un aspect à la fois écologique et fonctionnel.

L'objectif principal : les aliments ne subissant qu'une déshydratation quasiment nulle, cuisent dans un circuit de vapeur d'eau permanent. On obtient alors des grillades moelleuses.

Les caractéristique secondaires :

La cuisson à valeur diététique est obtenue par l'élimination considérable de matières grasses contenues dans les aliments. L'excés de combustion possible dans un barbecue classique, dù à des courants d'air ou un apport surabondant de charbon, qui risque de brûler les viandes, n'est plus à craindre. La chute des graisses fondues sur le combustible qui produit des flammes carbonisant les aliments, n'est plus possible avec ces nouvelles dispositions.

L'économie, obtenue par la convergence et la concentration de la chaleur vers les produits à cuire, sans aucune perdition thermique, réduit sensiblement le temps de cuisson, d'où une faible consommation de charbon. Un réglage latéral de l'entrée d'air en partie basse, permet de diminuer la combustion, de l'activer, ou d'arrêter et d'éteindre complètement le feu à tout moment, en occurence à la fin de la grillade. Le reste de combustible non consumé sera donc réutilisable.

L'aspect écologique est obtenu à l'aide d'éléments qui récupèrent les graisses, les cendres et les débris incandescents. Propre, cet appareil peut être utilisé à l'extérieur : jardin, varangue, balcon, ...ou à l'intérieur : appartement, ... La protection du milieu naturel ou de l'environnement immédiat est assurée. L'arrêt de la combustion par chute d'eau sur le charbon incandescent n'est plus nécessaire.

Fonctionnel, cet appareil répond à des critères bien ciblés qui le rendent également convivial et ergonomique. L'approvisionnement en charbon et en eau : des tiroirs coulissants amovibles (19) et (20) à bandes isolantes y sont appropriés. Les réglages latéraux du tirage : des ventilations basses (21) à bandes isolantes (22) sont en évidence. L'introduction des aliments sous les formes les plus variées : des grilles amovibles (14) qui le permettent. Des tables de travail pour des préparations préliminaires : des plateaux latéraux escamotables (26) sont prévus. La visualisation des aliments pendant la cuisson : une porte transparente (16) articulée et pivotante située en façade avant le permet. La manipulation à haute température des grilles (14) chargées d'aliments ou du récipient de graisses fondues (13) : une broche isolante (18) y est appropriée. La position de l'appareil sur un sol intérieur délicat : il n'y a aucune diffusion de la chaleur en partie basse, et les pieds (1) sont munis de semelles isolantes souples. L'utilisation à l'extérieur en tout temps : l'appareil est clos et étanche, insensible au vent, à la pluie, à la neige, à la poussière, ... L'intervention pendant la grillade : elle ne se justifie pas.

L'ensemble de cet appareil est une boîte métallique composée de monoblocs et d'éléments distincts.

Un sous-ensemble résistant aux déformations thermiques est composé de quatre pieds (1) à semelles souples isolantes fixés sur un socle (4) de forte épaisseur avec des orifices d'entrée d'air et de deux glissières (23).
Deux ventilations basses latérales (21) sont articulées sur le socle (4) et réglables en positions intermédiaires sur la ceinture (25) à l'aide de bandes isolantes (22).

Deux monoblocs latéraux composés chacun d'un bac à charbon (5), d'un récupérateur de cendre (3), et d'un tiroir (19) coulissent sur une glissière latérale (23). La translation de ces monoblocs amovibles se fait à l'aide de leur bande isolante (22).
Un monobloc central composé d'un bac à eau (12) et d'un tiroir (20) coulisse sur des supports internes (29). La translation de ce monobloc amovible se fait à l'aide de sa bande isolante (22).
Une ceinture intermédiaire périphérique (25) délimite la partie productrice de chaleur et de vapeur d'eau de la partie cuisson.

En façade avant cette ceinture (25) est assemblée à la partie basse des flasques (8) et un ftonton (28) fixé à ses extrémités sur la partie haute des flasques (8).Tous ces éléments de la façade avant constituent un sous-ensemble permettant la fixation d'un cadre (9) recevant la porte transparente (16). En façade arrière le flasque (7) est constitué d'un seul élément.
En façades latérales droite et gauche, deux joues (6) sont assemblées en partie basse sur la ceinture périphérique (25), sur les cotés aux flaques avants et arrière (8) et (7) et en partie haute aux évents (27).
Sur les flasques (8) et (7) sont fixées deux poignées (15) qui permettent la manutention de l'appareil et servent de support aux tables d'appoint (26) en position horizontale. Ces tables d'appoint (26) sont articulées sur les joues (6) et excamotées sous les évents (27) en position verticale.
En partie haute de l'appareil un toit (11) est lié aux évents (27) et aux frontons avant et arrière (28).
Des grilles amovibles (14) manipulées à l'aide d'une broche (18) sont posées sur des glissières (10) et limitées en translations par des butées (10'). Leur positionnement est rigoureux. Un bac à graisse (13) manipulé à l'aide de la broche (18) coulisse sur des glissières (30) et se met en butée sur divers supports internes (29). Sa position est rigoureuse par rapport aux grilles (14).
Des supports (29) multiples et divers à l'intérieur de l'appareil contribuent d'une part au maintien des éléments de façades et d'autre par à la translation du bac à eau (12), aux fixations des glissières (10), (30), et de manière générale à la liaison de tous les éléments fixes de l'appareil.

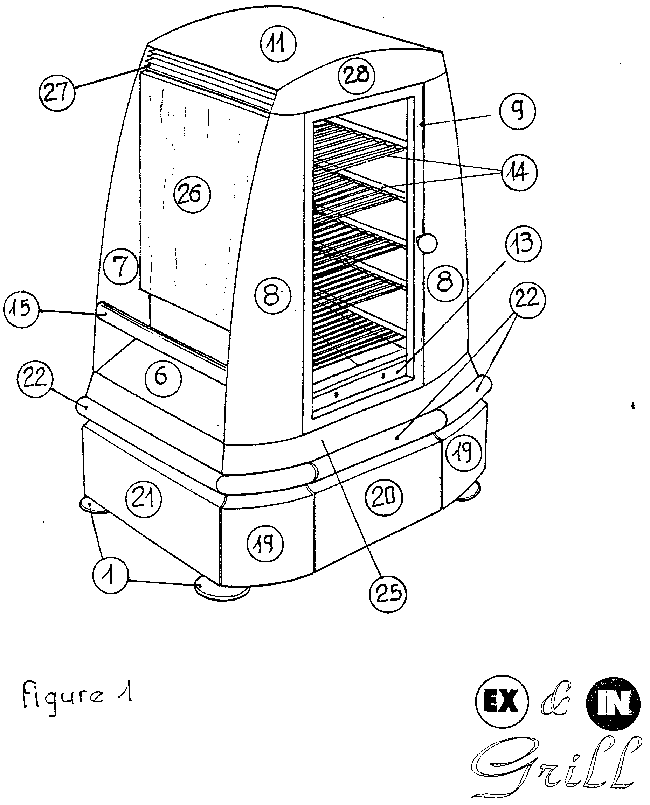

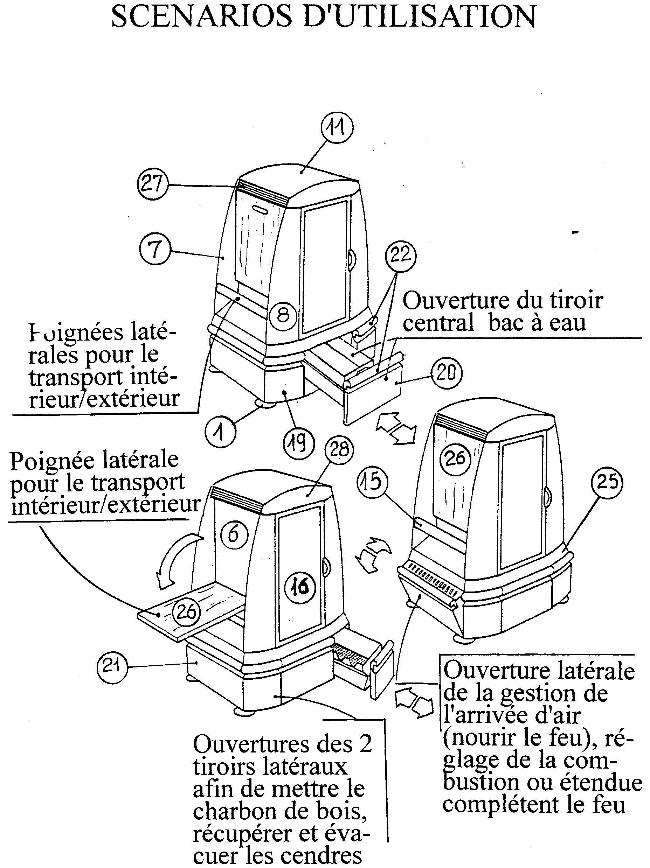

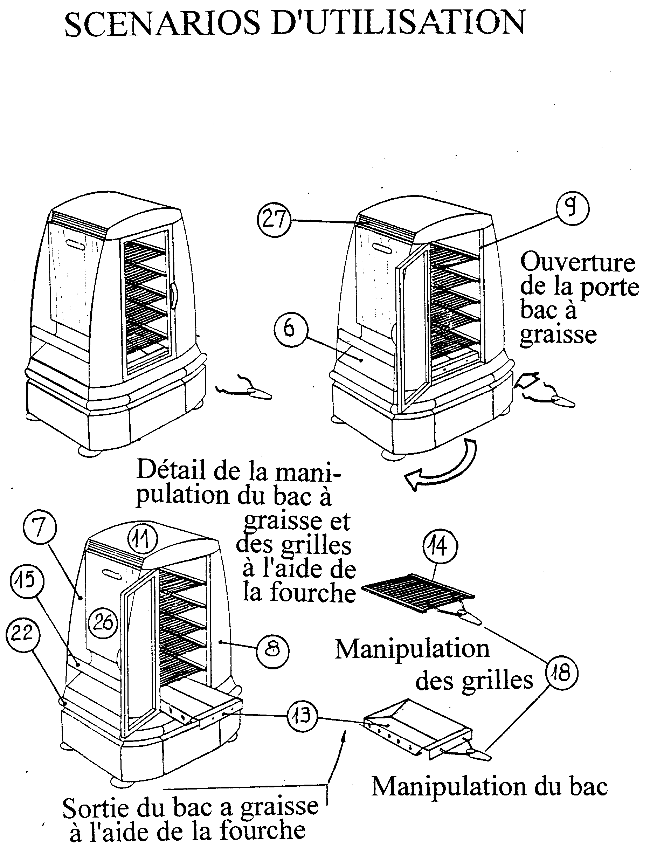

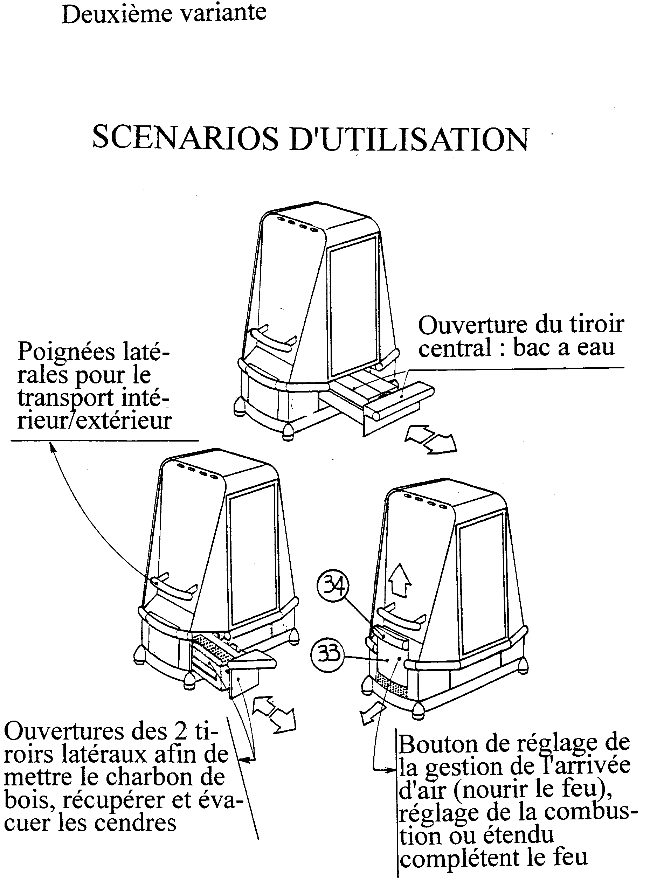

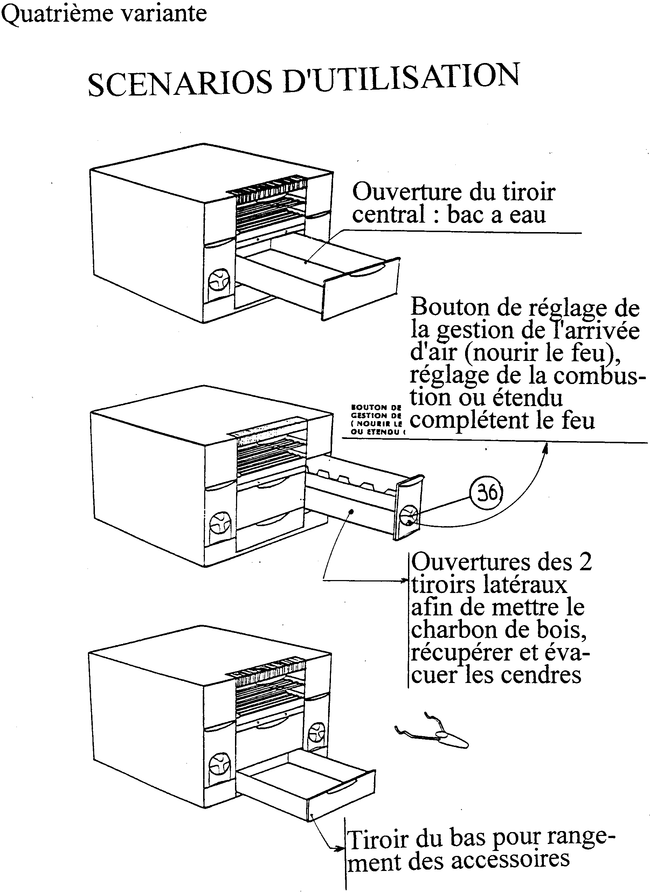

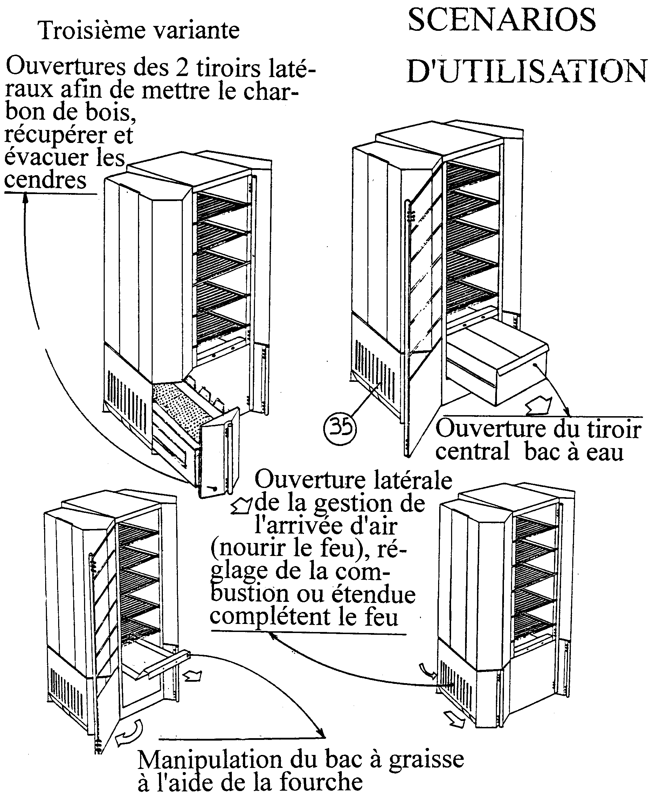

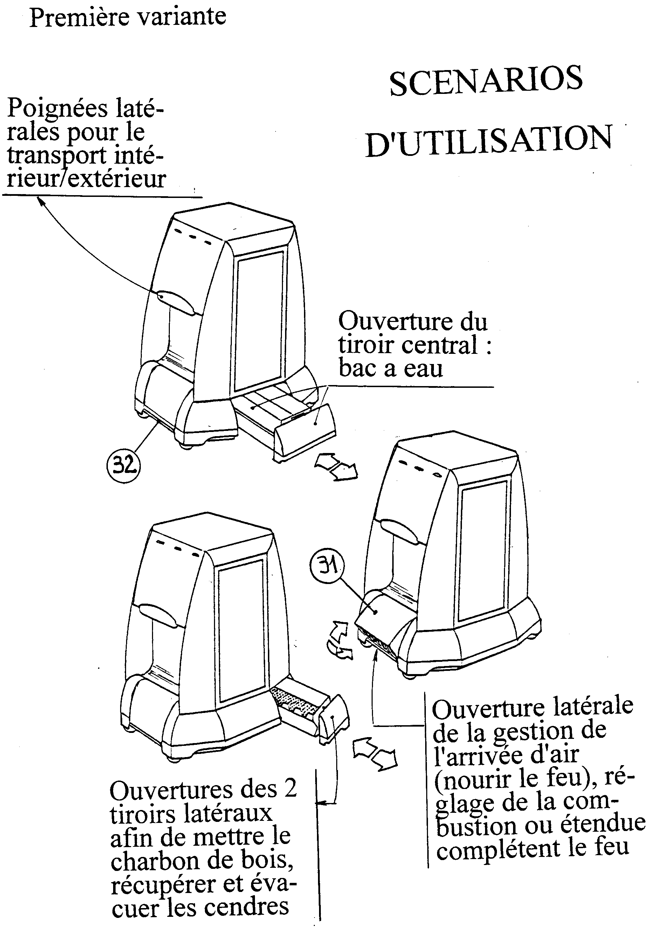

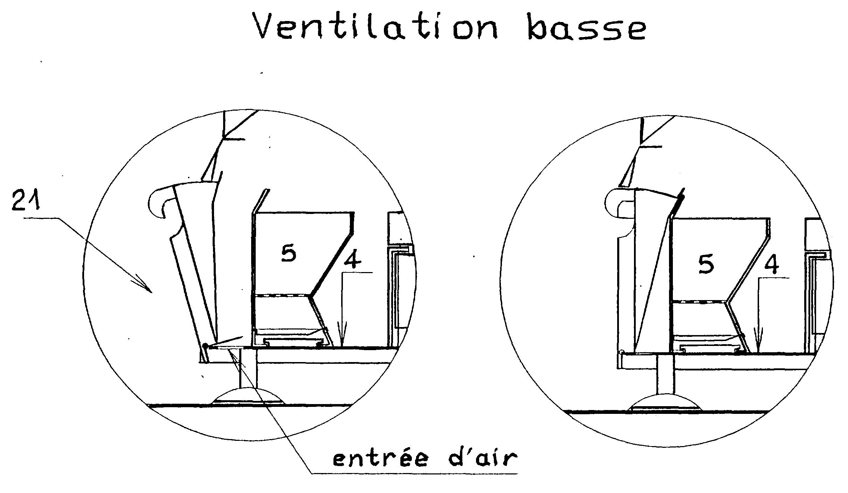

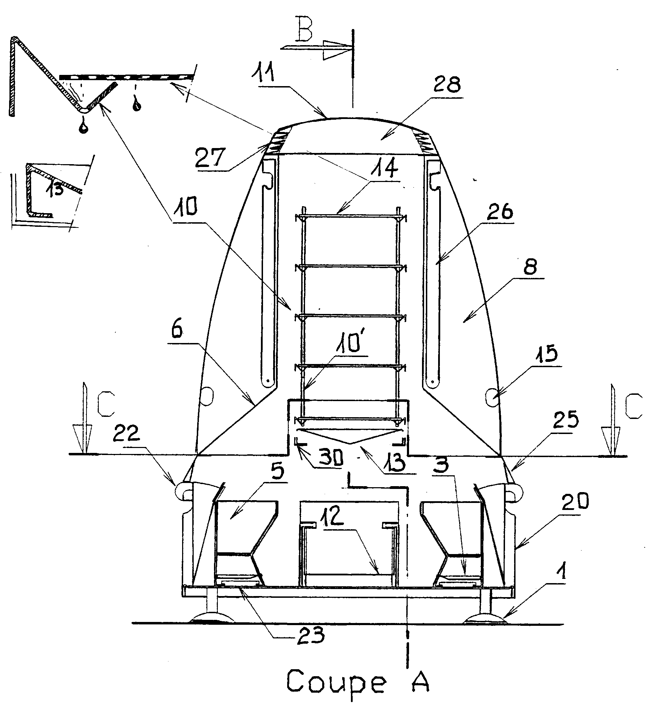

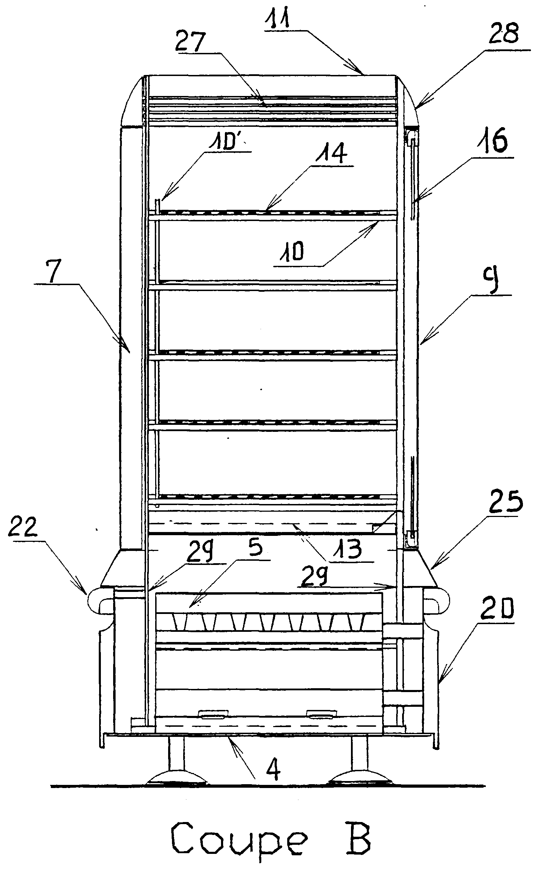

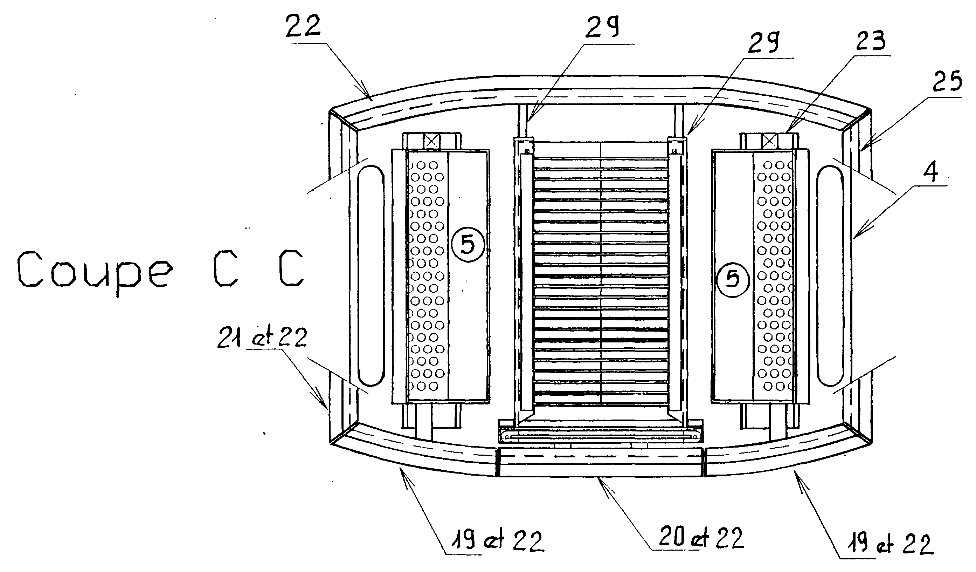

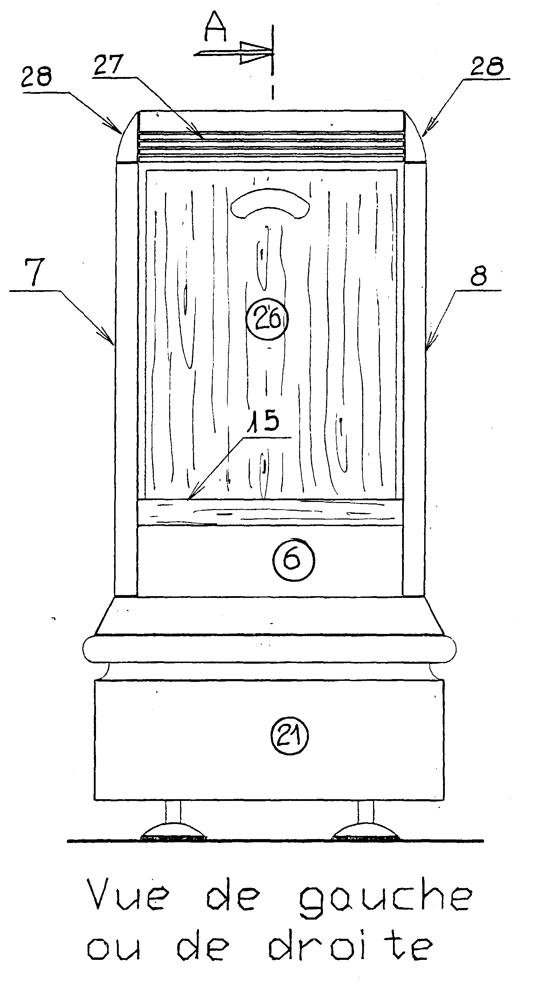

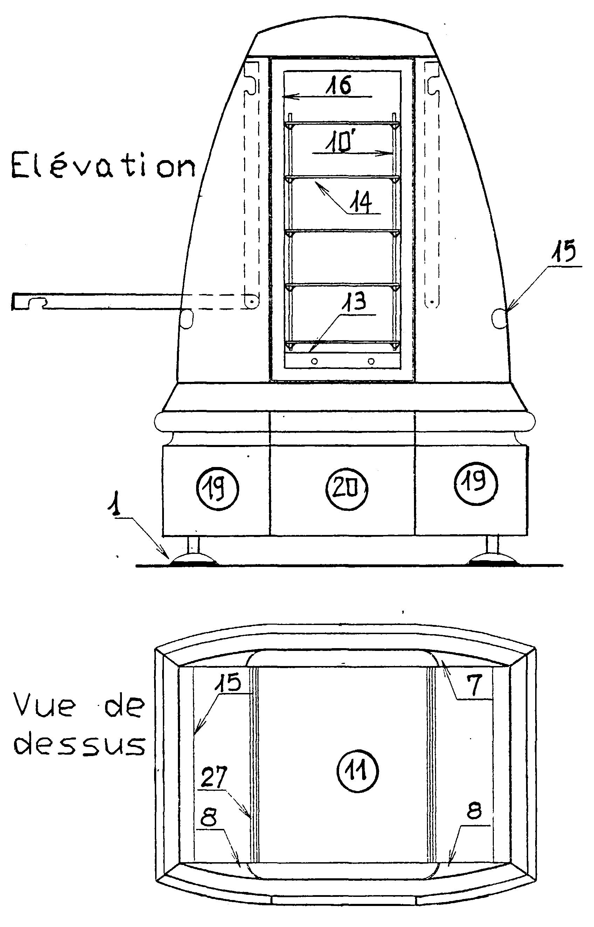

## Revendications

1. Dispositif permettant de faire rapidement et convivialement des grillades au charbon de bois dans une atmosphère de vapeur d'eau en milieu clos caractérisé par : deux bacs à charbon (5) en forme de cône qui projette les flux de chaleur vers les denrées alimentaires. Des orifices en dents de scie en partie haute de ces bacs a charbon contigus au bac à eau (12) favorisent partiellement les flux de chaleur vers ce bac à eau (12), permettant l'ébullition de l'eau et la production de la vapeur d'eau.

2. Dispositif selon la revendication 1 caractérisé : par deux faces latérales (6) en forme de tronc de pyramide qui complètent la convergence et la concentration des flux de chaleur et la vapeur d'eau vers le centre de l'appareil où se trouvent les grilles (14) chargées d'aliments.

3. Dispositif selon la revendication 1 caractérisé par : des glissières (10) de forme appropriée et des butées (10') permettant un positionnement rigoureux et systématique des grilles (14). Les chutes de graisses fondues provenant des grilles (14) et des glissières (10) se font exclusivement dans le bac à graisse (13).

4. Dispositif selon les revendications 1 et 3 caractérisé par : un bac a graisse (13) supprimant un colmatage intérieur par les chutes de matières grasses fondues dans le bac à eau (12) et des éclaboussement dans les bacs a charbon (5). Le fond de ce bac à graisse (13) incliné favorise le déplacement de la vapeur d'eau de bas en haut.

5. Dispositif selon la revendication 1 caractérisé par : deux arrivées d'air ou ventilations basses (21), articulées sur le socle (4) et réglées en positions intermédiaires ou fermée sur la ceinture (25) à l'aide d'une bande isolante (22). Ce réglage permet de réduire ou d'activer la combustion du charbon en fonction des besoins et d'éteindre le feu en fin de grillade. La chute d'eau sur le charbon incandescent pour son extinction n'est plus nécessaire et le combustible restant non consumé est réutilisable.
Première variante caractérisée par : les ventilations basses (21), l'articulation se fait en partie haute et les positionnements intermédiaires ou fermeture en partie basse sur le socle (4).
Deuxième variante caractérisée par : les ventilations basses (21), le réglage se fait par translation verticale à l'aide d'une bande isolante (22).
Troisième variante caractérisée par : les ventilations basses (21), le réglage se fait par translation horizon-talc d'une plaque qui ouvre ou ferme progressivement des orifices en fonction des besoins.
Quatrième variante caractérisée par : les ventilations basses (21) d'un appareil intégrable, le réglage se fait en façade par rotation d'in disque ou d'un bouton perforé qui permet l'ouverture ou la fermeture progressive des orifices d'entrée d'air.

6. Dispositif selon la revendication 1 caractérisé par : deux tables horizontales d'appoint (26) escamotables prenant appui sur les poignées de manutention (15) de l'appareil en position de service.

7. Dispositif selon la revendication 1 caractérisé par : par deux monoblocs tiroirs (19), bacs à charbon (5) et récupérateur de cendre (3), coulissant sur glissières (23) en manipulant sa bande isolante (22). Ces monoblocs permettent le contrôle et l'approvisionnement en charbon si nécessaire pendant des grillades successives sans perdition de chaleur, en toute facilité et sécurité.

8. Dispositif selon les revendications 1 et 2 caractérisé par : un monobloc tiroir (20) et bac à eau (12) coulissant sur des supports intérieurs (29) à l'aide de sa bande isolante (22). Ce monobloc permet le contrôle et l'alimentation en eau si nécessaire pendant des grillades successives sans perdition de chaleur, en toute facilité et sécurité.

9. Dispositif selon les revendications précédentes caractérisé par : un ensemble étanche, deux monoblocs tiroirs (19) bacs à charbons (5) recupérateur de cendre (3) et bande isolante (22), un monobloc tiroir (20) bac à eau (12) et bande isolante (22), des poignées de manutention (15), une porte transparente (16). Ces éléments permettent l'utilisation de l'appareil à l'intérieur de locaux sur des sol délicats, à l'extérieur en milieu exposé non protégé et la visualisation des denrées pendant toute la durée des grillades.

## Revendications modifiées

### Revendications modifiées conformément à la règle 86(2) CBE.

1. Dispositif permettant de faire rapidement et convivialement des grillades au charbon de bois dans une atmosphère de vapeur d'eau en milieu clos caractérisé par : deux bacs à charbon (5) en forme de cône qui projette les flux de chaleur vers les denrées alimentaires. Des orifices en dents de scie en partie haute de ces bacs à charbon contigus au bac à eau (12) favorisent partiellement les flux de chaleur vers ce bac à eau (12), permettant l'ébullition de l'eau et la production de la vapeur d'eau.
2. Dispositif selon la revendication 1 caractérisé : par deux faces latérales (6) en forme de tronc de pyramide qui complètent la convergence et la concentration des flux de chaleur et la vapeur d'eau vers le centre de l'appareil où se trouvent les grilles (14) chargées d'aliments.
3. Dispositif selon la revendication 1 caractérisé par : des glissières (10) de forme appropriée et des butées (10') permettant un positionnement rigoureux et systématique des grilles (14). Les chutes de graisses fondues provenant des grilles (14) et des glissières (10) se font exclusivement dans le bac à graisse (13).
4. Dispositif selon les revendications 1 et 3 caractérisé par : un bac à graisse (13) supprimant un colmatage intérieur par les chutes de matières grasses fondues dans le bac à eau (12) et des éclaboussement dans les bacs à charbon (5). Le fond de ce bac à graisse (13) incliné favorise le déplacement de la vapeur d'eau de bas en haut.
5. Dispositif selon la revendication 1 caractérisé par : deux arrivées d'air ou ventilations basses (21), articulées sur le socle (4) et réglées en positions intermédiaires ou fermée sur la ceinture (25) à l'aide d'une bande isolante (22). Ce réglage permet de réduire ou d'activer la combustion du charbon en fonction des besoins et d'éteindre le feu en fin de grillade. La chute d'eau sur le charbon incandescent pour son extinction n'est plus nécessaire et le combustible restant non consumé est réutilisable.
Première variante caractérisée par : les ventilations basses (31) l'articulation se fait en partie haute et les positionnements intermédiaires ou fermeture en partie basse sur le socle (32).
Deuxième variante caractérisée par : les ventilations basses (33), le réglage se fait par translation verticale à l'aide d'une bande isolante (34).
Troisième variante caractérisée par : les ventilations basses (35), le réglage se fait par translation horizontale d'une plaque qui ouvre ou ferme progressivement des orifices en fonction des besoins.
Quatrième variante caractérisée par : les ventilations basses (36) d'un appareil intégrable, le réglage se fait en façade par rotation d'in disque ou d'un bouton perforé qui permet l'ouverture ou la fermeture progressive des orifices d'entrée d'air.
